# EUROPÄISCHE PATENTSCHRIFT

(11) **EP 0 729 776 B1**
(45) Veröffentlichungstag und Bekanntmachung des Hinweises auf die Patenterteilung: **11.08.1999**
(21) Anmeldenummer: 95116533.1
(22) Anmeldetag: 20.10.1995
(51) Int. Cl.: B01D 45/06, B01D 53/26

(54) **Vorrichtung zur Ableitung von Flüssigkeiten aus einem mit Druckluft beaufschlagbaren Abscheidebehälter**
Device to drain away liquids from a separating container submitted to compressed air
Dispositif pour écouler des liquides d'un récipient de séparation soumis à l'air comprimé

(30) Priorität: 02.03.1995 DE 19507232
(43) Veröffentlichungstag der Anmeldung: 04.09.1996
(73) Patentinhaber: Firma Carl Freudenberg, 69469 Weinheim (DE)
(72) Erfinder: Sheasby, Richard, Warwickshire CV12 8QY (GB)

(56) Entgegenhaltungen:
- WO-A-91/12871
- US-A- 2 944 630
- US-A- 3 867 115
- US-A- 4 234 327
- US-A- 4 848 988

## Beschreibung

Die Erfindung betrifft eine Vorrichtung zur Ableitung von Flüssigkeiten aus einem mit Druckluft beaufschlagbaren Abscheidebehälter, der an seiner tiefsten Stelle durch ein Ventil verschließbar ist, das einen Ventilsitz und ein Schließglied aufweist, die dichtend miteinander in Eingriff bringbar sind, wobei das Schließglied durch den Druck P der Druckluft beaufschlagt ist.

Eine solche Vorrichtung ist bekannt. Das Schließglied wird dabei durch den Boden einer Überwurfmutter gebildet, die auf einen Gewindenippel des Abscheidebehälters aufgeschraubt ist. Die für eine Abdichtung erforderliche, gegenseitige Verpressung zwischen dem Schließglied und dem Ventilsitz wird durch eine Relativverdrehung der Überwurfmutter erreicht. Aus Handhabungsgründen ist das insbesondere dann wenig befriedigend, wenn das Schließglied zur Entfernung von Kondenswasser regelmäßig geöffnet werden muß.

Der Erfindung liegt die Aufgabe zugrunde, eine solche Vorrichtung derart weiterzuentwickeln, daß sich eine automatische Betätigung des Schließgliedes ergibt.

Die Dokumente US-A-3 876 115 und US-A-2 544 630 beschreiben Abscheide vorrichtungen, bei denen das Ventil vom Druck entgegen eine Ventilfeder geöffnet wird.

Diese Aufgabe wird erfindungsgemäß bei einer Vorrichtung der eingangs genannten Art mit den kennzeichnenden Merkmalen von Anspruch 1 gelöst. Auf vorteilhafte Ausgestaltungen nehmen die Unteransprüche bezug.

Bei der erfindungsgemäßen Vorrichtung ist es vorgesehen, daß das Schließglied auf einer Ventilfeder abgestützt und gegen die Kraft der Ventilfeder von der Druckluft an den Ventilsitz anpreßbar ist, und daß die Ventilfeder das Schließglied von dem Ventilsitz abzuheben geeignet ist, wenn der Druck P der Druckluft einen willkürlich festgelegten Mindestwert unterschreitet. Das ist beispielsweise nachts oder an Wochenenden der Fall und hat zur Folge, daß in dem Abscheidebehälter angesammelte Flüssigkeiten, beispielsweise Kondenswasser, nach unten abfließen können, ohne daß es manueller Maßnahmen bedarf. Wird anschließend die Druckluftversorgungseinrichtung wieder in Betrieb genommen, dann resultiert ein Druckanstieg in dem Abscheidebehälter mit der Folge, daß das Schließglied an den Ventilsitz angepreßt und der Abscheidebehälter nach außen abgeschlossen wird.

Voraussetzung für die Erzielung dieser Funktion ist es, daß der Durchflußquerschnitt des Ventils geringer ist als der Durchflußquerschnitt der Zuluftleitung, durch die der Abscheidebehälter mit der Druckluftversorgungseinrichtung verbunden ist. Diese Bedingung läßt sich leicht erfüllen.

Es ist vorgesehen, daß das Schließglied aus elastomerem Werkstoff besteht. Es läßt sich bei einer solchen Ausbildung besonders kostengünstig erzeugen, ist funktionssicher und gelangt geräuschlos in einen Dichtungskontakt mit dem zugehörigen Ventilsitz.

Nach einer vorteilhaften Ausgestaltung ist es vorgesehen, daß als Ventilfeder eine Schraubenfeder zur Anwendung gelangt, vorzugsweise eine Schraubendruckfeder. Diese kann zwischen dem Schließglied und einem das Ventil aufnehmenden Ventilgehäuse angeordnet sein. Die resultierende Einheit weist im einfachsten Falle nur vier unabhängig voneinander erzeugte Einzelteile auf. Neben der einfachen Herstellbarkeit ist die ausgezeichnete Funktionssicherheit von hervorzuhebendem Vorteil.

Die Erfindung wird nachfolgend anhand der beiliegenden Zeichnung weiter verdeutlicht. Diese zeigt jeweils in längsgeschnittener Darstellung:
Figur 1 einen Abscheidebehälter zur Abscheidung von Flüssigkeiten aus einem Druckluftnetz.
Figur 2 eine Vorrichtung zur Ableitung von Flüssigkeiten, die sich während der bestimmungsgemäßen Verwendung in dem Abscheidebehälter gemäß Figur 1 ansammeln können.

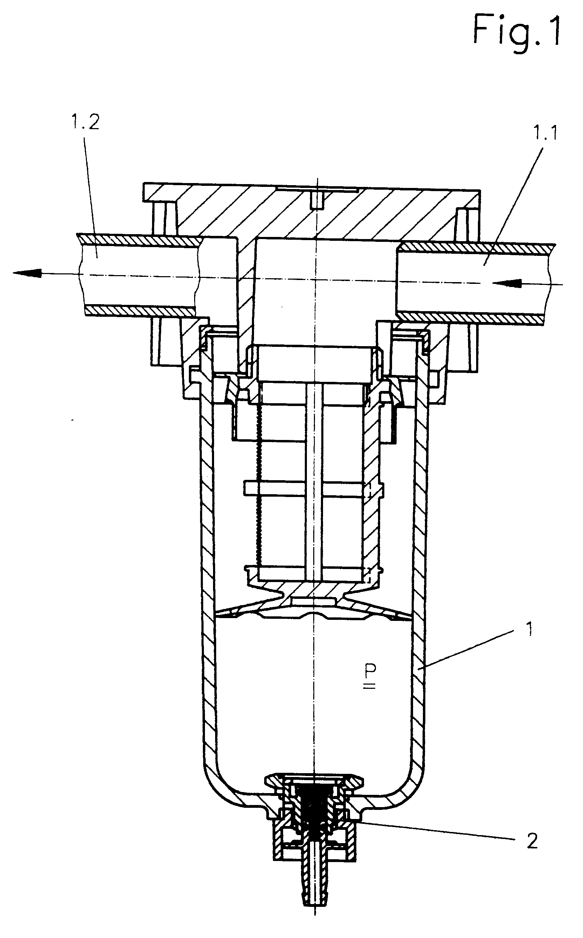

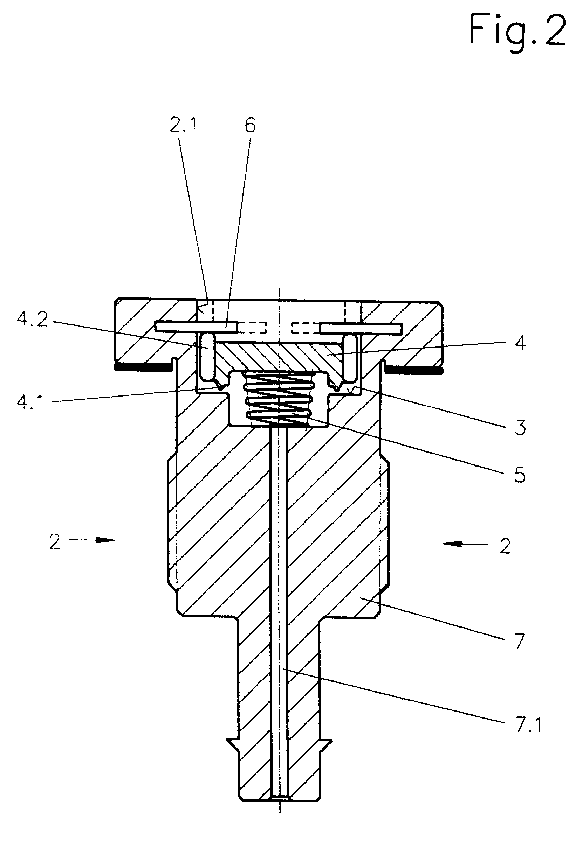

Der in Figur 1 gezeigte Abscheidebehälter ist während der bestimmungsgemäßen Verwendung in einem Druckluftnetz angeordnet und zwischen einer Zuluftleitung 1.1 und einer Abluftleitung 1.2 angeordnet. Der insgesamt zur Verfügung stehende Durchströmungsquerschnitt erfährt innerhalb des Abscheidebehälters eine plötzliche Aufweitung mit der Folge, daß von der zu fördernden Druckluft mitgeführte Flüssigkeitspartikel ausgeschieden werden. Diese sammeln sich im unteren Bereich des Abscheidebehälters kontinuierlich zunehmend an. Der Innenraum des Abscheidebehälters ist dem normalen Druck P der Druckluft ausgesetzt. Die am unteren Ende des Abscheidebehälters 1 angeordnete Vorrichtung 2 enthält ein Schließglied 4, das durch den Druck P der Druckluft an den Ventilsitz 3 angepreßt ist (Figur 2). Dabei wird die Ventilfeder 5, welche durch eine Schraubendruckfeder gebildet ist, zusammengepreßt und die umlaufende Dichtlippe 4.1 gelangt in einen durchgehenden Berührungskontakt mit dem Ventilsitz 3. Das Schließglied 4 besteht aus elastomerem Werkstoff. Es ist im Bereich seines Außenumfanges mit vier gleichmäßig in Umfangsrichtung verteilten Führungsflügeln 4.2 versehen, die einen radialen Abstand von der zylindrischen Führungsfläche 2.1 haben. Hierdurch ist eine leichte Beweglichkeit des Schließgliedes 4 in dem Gehäuse gewährleistet. Dem Ventilsitz 3 gegenüberliegend wird die Beweglichkeit des Schließgliedes 4 durch eine Anschlagscheibe 6 begrenzt, die in eine umlaufende, nach innen geöffnete Nut des Gehäuses 7 eingeclipst ist.

Das Gehäuse 7 ist im übrigen in axialer Richtung vollkommen durchdrungen durch eine Entwässerungsbohrung 7.1. Diese erstreckt sich senkrecht nach unten.

Zur Funktion ist folgendes auszuführen:

Bei normalem Druck P im Inneren des Abscheidebehälters 1 wird das Schließglied 4 gegen die Kraft der Ventilfeder 5 mit seiner umlaufenden Dichtlippe 4.1 an den

Ventilsitz 3 angepreßt. Der Abscheidebehälter 1 ist dadurch geschlossen. Aus der Druckluft ausgeschiedene Flüssigkeitsbestandteile können sich im unteren Teil des Abscheidebehälters ansammeln.

Wird die Druckluftversorgungseinrichtung außer Betrieb gesetzt und weiterhin Druckluft durch die Abluftleitung 1.2 entnommen, dann hat das einen Druckabfall im Inneren des Abscheidebehälters 1 zur Folge. Wird diesbezüglich ein Wert unterschritten, bei dem die Ventilfeder 5 das Schließglied 4 von dem Ventilsitz 3 abzuheben geeignet ist, dann gelangt das Ventil 2 in Offenstellung und die in dem Abscheidebehälter 1 angesammelte Flüssigkeit kann das Ventil 2 passieren und nach außen entweichen.

Wird die Druckluftversorgungseinrichtung erneut in Betrieb genommen, dann wird durch die Zuflußleitung 1.1 mehr Druckluft in den Abscheidebehälter 1 eingespeist als unter Umströmung des Schließgliedes 4 entweichen kann. Als Folge davon resultiert ein Anstieg des Druckes der Druckluft im Abscheidebehälter 1, der das Schließglied 4 auf der der Ventilfeder 5 gegenüberliegenden Seite belastet. Oberhalb eines gewissen Wertes, der abhängig ist von der Federsteifigkeit der Ventilfeder 5, gelangt das Schließglied 4 in Bewegung und die Dichtlippe 4.1 mit dem Ventilsitz 3 in dichtem Eingriff. Das Ventil 2 ist dadurch geschlossen und der Arbeitsvorgang kann aufs neue beginnen.

## Patentansprüche

1. Vorrichtung zur Ableitung von Flüssigkeiten aus einem mit Druckluft beaufschlagbaren Abscheidebehälter (1), der an seiner tiefsten Stelle durch ein Ventil (2) verschließbar ist, das einen Ventilsitz (3) und ein Schließglied (4) aufweist, die dichtend miteinander in Eingriff bringbar sind, wobei das Schließglied (4) auf einer Ventilfeder (5) abgestützt ist, **dadurch gekennzeichnet**, daß das Schließglied (4) gegen die Kraft der Ventilfeder (5) von dem Druck (P) der das Schließglied (4) beaufschlagenden Druckluft an den Ventilsitz (3) anpreßbar ist, die Ventilfeder (5) das Schließglied (4) von dem Ventilsitz abhebt, wenn der Druck (P) der Druckluft einen willkürlich festgelegten Mindestwert (P1) unterschreitet, und daß das Schließglied (4) aus elastomerem Werkstoff besteht und eine umlaufende Dichtlippe (4.1) hat, welche im Schließzustand des Ventils (2) zur Dichtanlage auf dem Ventilsitz (3) kommt.

2. Vorrichtung nach Anspruch 1, **dadurch gekennzeichnet**, daß die Ventilfeder (5) als Schraubenfeder ausgebildet ist.

3. Vorrichtung nach Anspruch 1 oder 2, **dadurch gekennzeichnet**, daß das Schließglied (4) in Umfangsrichtung verteilt angeordnete Führungsflügel (4.2) hat, welche einen radialen Abstand von einer zugeordneten, zylindrischen Führungsfläche (2.1) am Gehäuse (1) haben.

4. Vorrichtung nach einem der vorangehenden Ansprüche, **dadurch gekennzeichnet**, daß eine dem Ventilsitz (3) gegenüberliegend angeordnete Anschlagscheibe (6), welche die Beweglichkeit des Schließglieds (4) in Öffnungsrichtung begrenzt.

5. Vorrichtung nach Anspruch 4, **dadurch gekennzeichnet**, daß die Anschlagscheibe (6) in eine umlaufende, nach innen offene Nut des Gehäuses (7) eingeclipst ist.

## Claims

1. A device for draining liquids from a filter (1), to which compressed air can be admitted and which can be closed at its deepest point by a valve (2), which has a valve seat (3) and a closing member (4), which can be brought into engagement with one another in a sealing manner, the closing member (4) being supported on a valve spring (5), characterized in that the closing member (4), against the force of the valve spring (5), can be pressed against the valve seat (3) by the pressure (P) of the compressed air acting on the closing member (4), and the valve spring (5) lifts the closing member (4) from the valve seat if the pressure (P) of the compressed air falls below a minimum value (P1) established at will, and in that the closing member (4) is made of elastomeric material and has an encircling sealing lip (4.1), which in the closed state of the valve (2) comes to bear in a sealing manner on the valve seat (3).

2. A device according to claim 1, characterized in that the valve spring (5) is designed as a helical spring.

3. A device according to either of claims 1 and 2, characterized in that the closing member (4) has guide vanes (4.2), which are distributed in the circumferential direction and are at a radial distance from an associated, cylindrical guide surface (2.1) on the housing (1).

4. A device according to any one of the preceding claims, characterized in that a stop disc (6) is provided, and this stop disc (6) is arranged opposite the valve seat (3) and limits the mobility of the closing member (4) in the opening direction.

5. A device according to claim 4, characterized in that the stop disc (6) is clipped into an encircling groove, open to the inside, of the housing (7).

## Revendications

1. Dispositif pour écouler des liquides d'un récipient de séparation (1) pouvant être soumis à de l'air comprimé et qui peut être fermé, à son niveau le plus bas, par une soupape (2) qui comprend un siège de soupape (3) et un élément de fermeture (4) pouvant être mis en contact étanche l'un avec l'autre, l'élément de fermeture (4) étant appuyé sur un ressort de soupape (5), caractérisé en ce que l'élément de fermeture (4) peut être pressé sur le siège de soupape (3), dans le sens opposé à la force du ressort de soupape (5), par la pression (P) de l'air comprimé auquel est soumis l'élément de fermeture (4), en ce que le ressort de soupape (5) soulève l'élément de fermeture (4) du siège de soupape lorsque la pression (P) de l'air comprimé prend une valeur inférieure à une valeur minimale (P1) fixée arbitrairement, et en ce que l'élément de fermeture (4) est en matière élastomère et est pourvu, sur tout son pourtour, d'une lèvre d'étanchéité (4.1) qui, dans l'état de fermeture de la soupape (2), vient en appui étanche sur le siège de soupape (3).

2. Dispositif selon la revendication 1, caractérisé en ce que le ressort de soupape (5) est exécuté en tant que ressort cylindrique.

3. Dispositif selon l'une des revendications 1 ou 2, caractérisé en ce que l'élément de fermeture (4) est pourvu d'ailes de guidage (4.2) réparties dans la direction circonférentielle et qui présentent une distance radiale par rapport à une surface de guidage (2.1) cylindrique associée du boîtier (1).

4. Dispositif selon l'une des revendications précédentes, caractérisé en ce qu'un disque de butée (6) situé sur le côté opposé au siège de soupape (3) limite la mobilité de l'élément de fermeture (4) dans la direction d'ouverture.

5. Dispositif selon la revendication 4, caractérisé en ce que le disque de butée (6) est emboîté dans une gorge périphérique du boîtier (7) ouverte vers l'intérieur.
